# EUROPÄISCHE PATENTANMELDUNG

(11) **EP 3 279 438 A1**
(43) Veröffentlichungstag der Anmeldung: **07.02.2018**
(21) Anmeldenummer: 17180638.3
(22) Anmeldetag: 11.07.2017
(51) Int. Cl.: F01D 25/18, F02C 7/06

(54) **VORRICHTUNG EINER STRÖMUNGSMASCHINE ZUM ABSCHEIDEN VON ÖL AUS EINEM LUFT-ÖL-VOLUMENSTROM**

(30) Priorität: 03.08.2016 DE 102016114394
(71) Anmelder: Rolls-Royce Deutschland Ltd & Co KG, 15827 Blankenfelde-Mahlow (DE)
(72) Erfinder: Beier, Jürgen, 15732 Schulzendorf (DE); Blumrich, Markus, 10247 Berlin (DE)
(74) Vertreter: Schmidt, Martin Michael

(57) **Zusammenfassung**

Es wird eine Vorrichtung (40) einer Strömungsmaschine (1) zum Abscheiden von Öl aus einem Luft-Öl-Volumenstrom mit einer ersten Abscheideeinrichtung (36) und einer zweiten Abscheideeinrichtung (39) beschrieben, wobei der ersten Abscheideeinrichtung (36) ein Luft-Öl-Volumenstrom aus einem mit Öl beladenen Bereich (30) der Strömungsmaschine (1) zuführbar ist, und wobei der Luft-Öl-Volumenstrom, dessen Ölbeladung im Bereich der ersten Abscheideeinrichtung (36) reduzierbar ist, stromab der ersten Abscheideeinrichtung (36) mittels einer Leitung (38) der zweiten Abscheideeinrichtung (39) zuführbar ist. Es ist eine stromab der ersten Abscheideeinrichtung (36) und stromauf der zweiten Abscheideeinrichtung (39) angeordnete Einrichtung (48) zur Kühlung des in der Leitung (38) geführten Luft-Öl-Volumenstroms vorgesehen.

## Beschreibung

Die Erfindung betrifft eine Vorrichtung einer Strömungsmaschine zum Abscheiden von Öl aus einem Luft-Öl-Volumenstrom mit einer ersten und einer zweiten Abscheideeinrichtung gemäß der im Oberbegriff des Patentanspruches 1 näher definierten Art.

Flugtriebwerke weisen einen Ölkreislauf auf, dessen Öl insbesondere zur Schmierung und Kühlung von Rotorlagern und Zahnrädern sowie Lagern der Getriebe des Flugtriebwerks eingesetzt wird. Zu dem Ölkreislauf gehören insbesondere eine Tankvorrichtung, eine Druckpumpe, Ölrückführpumpen, Filter, ein Ölkühler und ein Entlüftungssystem. Das Öl wird im Ölkreislauf mittels der Druckpumpe von der Tankvorrichtung über Versorgungs- oder Druckölleitungen und einen Druckfilter zu den mit Öl zu beaufschlagenden Bereichen des Triebwerks gefördert. Des Weiteren wird das Öl des Ölkreislaufs über insbesondere mehrere Ölrückführpumpen aus den jeweiligen Bereichen des Triebwerks über eine Filtereinrichtung und einen Ölkühler zurück zu der Tankvorrichtung gepumpt. Mittels des Entlüftungssystems wird im Betrieb des Flugtriebwerks im Bereich von Lagerkammern die Ölbeladung von im Betrieb des Flugtriebwerks entstehendem Luft-Öl-Gemisch reduziert und die gereinigte Luft an die Umgebung abgeführt, während das aus dem Luft-Öl-Gemisch abgeschiedene Öl im Ölkreislauf verbleibt.

Beispielsweise aus der DE 10 2014 113 128 A1 ist es bekannt, einer Tankvorrichtung eines Ölkreislaufs eines Flugtriebwerks über eine Einlasseinrichtung einen Luft-Öl-Volumenstrom bzw. eine sogenannte ölhaltige Verbrauchsluft zuzuführen. Mittels eines Ölabscheiders wird im Bereich der Tankvorrichtung Öl aus dem Luft-Öl-Volumenstrom abgeschieden, wobei der aus dem Ölabscheider austretende Luft-Öl-Volumenstrom mit einer gegenüber dem der Tankvorrichtung zugeführten Luft-Öl-Volumenstrom geringeren Ölbeladung über eine Leitung aus der Tankvorrichtung abgeführt wird. Dieser Luft-Öl-Volumenstrom kann einem weiteren Ölabscheider zur weiteren Reduzierung der Ölbeladung zugeführt werden, wobei das abgeschiedene Öl dem Ölkreislauf zugeführt und der aus dem weiteren Ölabscheider ausströmende Luft-Öl-Volumenstrom an die Umgebung abgegeben wird.

Der an die Umgebung abgegebene Luft-Öl-Volumenstrom kann gegebenenfalls eine unerwünscht hohe Ölbeladung aufweisen, so dass ein unerwünscht großer Ölverlust des Ölkreislaufes im Betrieb des Flugtriebwerks auftritt und durch den Austritt des Luft-Öl-Volumenstroms aus dem Flugtriebwerk eine sogenannte Rauchfahne entsteht.

Es ist Aufgabe der vorliegenden Erfindung, eine Vorrichtung einer Strömungsmaschine der eingangs näher beschriebenen Art zu schaffen, die durch eine hohe Abscheideleistung gekennzeichnet ist.

Erfindungsgemäß wird diese Aufgabe mit einer Vorrichtung mit den Merkmalen des Patentanspruches 1 gelöst.

Die erfindungsgemäße Vorrichtung einer Strömungsmaschine, insbesondere eines Flugtriebwerkes, zum Abscheiden von Öl aus einem Luft-Öl-Volumenstrom ist mit einer ersten Abscheideeinrichtung und einer zweiten Abscheideeinrichtung ausgeführt, wobei der ersten Abscheideeinrichtung ein Luft-Öl-Volumenstrom aus einem mit Öl beladenen Bereich der Strömungsmaschine zuführbar ist, und wobei der Luft-Öl-Volumenstrom, dessen Ölbeladung im Bereich der ersten Abscheideeinrichtung reduzierbar ist, stromab der ersten Abscheideeinrichtung mittels einer Leitung der zweiten Abscheideeinrichtung zuführbar ist.

Erfindungsgemäß wird zur Erzielung einer hohen Abscheideleistung der Vorrichtung vorgeschlagen, eine stromab der ersten Abscheideeinrichtung und stromauf der zweiten Abscheideeinrichtung angeordnete Einrichtung zur Kühlung des in der Leitung geführten Luft-Öl-Volumenstroms vorzusehen.

Damit ist über die erfindungsgemäß ausgeführte Vorrichtung sowohl flüssiges tröpfchenförmiges Öl als auch dampfförmiges Öl aus dem der Vorrichtung zugeführten Luft-Öl-Volumenstrom effektiv abscheidbar, und ein von der Vorrichtung an die Umgebung abgegebener Luft-Öl-Volumenstrom weist lediglich eine geringe Ölbeladung auf oder stellt sogar einen vollständig von Öl befreiten Luftstrom dar. Zusätzlich wird auch ein Ölverlust eines Ölkreislaufes durch die effektive Abscheidung von Öl aus dem der ersten Abscheideeinrichtung zugeführten Luft-Öl-Volumenstrom vorteilhafterweise minimiert, sodass ein Gewicht einer mit der erfindungsgemäßen Vorrichtung ausgeführten Strömungsmaschine durch eine nur noch in geringem Umfang vorzuhaltende Ölmenge mit entsprechend klein ausführbaren Tankvorrichtungen niedrig ist.

Der der ersten Abscheideeinrichtung zugeführte Luft-Öl-Volumenstrom ist insbesondere sowohl mit flüssigem tröpchenförmigem Öl als auch mit dampfförmigem Öl beladen, wobei letzteres insbesondere durch hohe im Betrieb der Strömungsmaschine in den mit Öl beaufschlagten Bereichen, insbesondere Lagerkammern, vorliegende Temperaturen entsteht. Die erste Abscheideeinrichtung der erfindungsgemäßen Vorrichtung ist zur Abscheidung von flüssigem tröpfchenförmigem Öl aus dem der ersten Abscheideeinrichtung zugeführten Luft-Öl-Volumenstrom ausgeführt, so dass eine Beladung des Luft-Öl-Volumenstroms mit flüssigem tröpfchenförmigem Öl im Bereich der ersten Abscheideeinrichtung reduziert wird. Der aus der ersten Abscheideeinrichtung ausströmende Luft-Öl-Volumenstrom wird stromab mittels der Einrichtung gekühlt. Dabei kondensiert das in dem Luft-Öl-Volumenstrom befindliche dampfförmige Öl, welches im Bereich der ersten Abscheideeinrichtung nicht oder nicht in gewünschtem Umfang abgeschieden wird, wodurch wiederum die Beladung des Luft-Öl-Volumenstroms mit Öltröpfchen ansteigt. Die zweite Abscheideeinrichtung, der der Luft-Öl-Volumenstrom stromab der Einrichtung zugeführt wird, ist zur Abscheidung von Öltröpfchen aus dem Luft-Öl-Volumenstrom ausgeführt.

Durch die Anordnung der Einrichtung stromab der ersten Abscheideeinrichtung wird ein effizientes Kondensieren des dampfförmigen Öls zu Öltröpfchen erreicht, da im Bereich der ersten Abscheideeinrichtung bereits ein Anteil des mitgeführten flüssigen tröpfchenförmigen Öls aus dem Luft-Öl-Volumenstrom abgeschieden wird und der Anteil des zu kühlenden flüssigen tröpfchenförmigen Öls reduziert ist und ein höherer Teil der Kühlleistung der Einrichtung für die Kondensation des dampfförmigen Öls zur Verfügung steht.

Die Einrichtung ist bei einer vorteilhaften Ausführung der erfindungsgemäßen Vorrichtung als Luftkühleinrichtung, insbesondere als Oberflächenkühler, ausgeführt. Der Luft-Öl-Volumenstrom wird hierbei im Bereich der Einrichtung zur Vergrößerung einer Oberfläche insbesondere auf mehrere insbesondere parallel zueinander verlaufende Leitungen aufgeteilt, wobei diese Rippen darstellenden Leitungen insbesondere quer zur Strömungsrichtung des Luft-Öl-Volumenstroms mit einem Kühlluftstrom und/oder einem Kühlölstrom beaufschlagt werden.

Bei einer vorteilhaften Ausführung einer erfindungsgemäßen Vorrichtung ist es vorgesehen, dass ein Nebenstromkanal der Strömungsmaschine die Einrichtung zur Kühlung darstellt, wobei die Leitung zumindest bereichsweise innerhalb des Nebenstromkanals geführt ist. Auf diese Weise wird ohne das Vorsehen einer separaten Kühleinrichtung ein Kondensieren des dampfförmigen Öls in dem Luft-Öl-Volumenstrom auf kostengünstige und bauraumoptimierte Weise erzielt. Alternativ hierzu kann es auch vorgesehen sein, dass die Leitung durch eine Triebwerksgondel bzw. Nacelle des Flugtriebwerks geführt ist und durch eine im Betrieb des Flugtriebwerks in der Triebwerksgondel auftretende Strömung kühlbar ist.

Die Einrichtung zur Kühlung des in der Leitung geführten Luft-Öl-Volumenstroms kann als Ölkühleinrichtung ausgeführt sein, bei der beispielsweise eine Ölleitung um die den Luft-Öl-Volumenstrom führende Leitung angeordnet ist, wobei zur effektiven Kühlung eine Oberflächenvergrößerung durch Rippen vorgesehen sein kann. Das zur Kühlung verwendete Öl kann beispielsweise von einer Kühleinrichtung stammen, in deren Bereich das Öl des Ölkreislaufs durch Treibstoff gekühlt wird.

Die Einrichtung ist bei einer vorteilhaften Ausführung der Vorrichtung zur Kühlung des in der Leitung geführten Luft-Öl-Volumenstroms als Treibstoffkühleinrichtung ausgeführt, wobei der Treibstoff hierzu in einer Leitung geführt ist, der die den Luft-Öl-Volumenstrom führende Leitung zumindest bereichsweise umgibt.

Bei einer vorteilhaften Ausführung der erfindungsgemäßen Vorrichtung weist die Einrichtung zur Kühlung des in der Leitung geführten Luft-Öl-Volumenstroms eine Einrichtung zum Einleiten, insbesondere Einsprühen von feinvernebeltem gekühlten Öl in die Leitung auf, wobei durch das durch die Einrichtung eingebrachte kühle Öl das dampfförmige Öl des Luft-Öl-Volumenstroms kondensiert und die dabei im Luft-Öl-Volumenstrom entstehenden Öltröpfchen auf einfache Weise im Bereich der zweiten Abscheideeinrichtung mit geringem Aufwand aus dem Luft-Öl-Volumenstrom abscheidbar sind.

Die erste Abscheideeinrichtung ist bei einer einfach in bestehende Systeme integrierbaren Vorrichtung innerhalb einer Tankvorrichtung eines Ölkreislaufes des Flugtriebwerks angeordnet, wobei die erste Abscheideeinrichtung bei bestehenden Systemen beispielsweise zur Entlüftung von rückgefördertem Öl ausgeführt ist.

Darüber hinaus ist die erste Abscheideeinrichtung bei einer konstruktiv einfachen Ausführung der erfindungsgemäßen Vorrichtung als Zyklon ausgeführt, wobei der dem Zyklon zugeführte Luft-Öl-Volumenstrom den Zyklon aufgrund von Zentrifugalkräften spiralförmig durchströmt und dabei an einem Wandungsbereich des Zyklons Öltröpfchen des Luft-Öl-Volumenstroms durch die auftretenden Fliehkräfte abgeschieden werden.

Die zweite Abscheideeinrichtung ist bei einer vorteilhaften Ausführung der erfindungsgemäßen Vorrichtung als Zentrifugalabscheider bzw. als sogenannter

Breather ausgeführt. Die Abscheidung von Öltröpfchen aus dem der zweiten Abscheideeinrichtung zugeführten Luft-Öl-Volumenstrom erfolgt insbesondere über einen im Bereich des Breathers vorgesehenen und als Zentrifuge wirkenden Umlenkbereich, wobei Öltröpfchen mit kleineren Durchmessern durch einen in dem Zentrifugalabscheider angeordneten Metallschaum aufgefangen und so ebenfalls aus dem Luft-Öl-Volumenstrom gefiltert werden.

Bei einer weiteren vorteilhaften Ausführungsform der erfindungsgemäßen Vorrichtung ist wenigstens ein Leitungsbereich vorgesehen, mittels welchem der ersten Abscheideeinrichtung ein Luft-Öl-Volumenstrom aus einer Lagerkammer der Strömungsmaschine zuführbar ist. Der ersten Abscheideeinrichtung ist allerdings auch aus anderen mit Öl beladenen Bereichen der Strömungsmaschine, beispielsweise aus einer Hilfsgerätegetriebeeinrichtung, ein Luft-Öl-Volumenstrom zuführbar. Die erfindungsgemäße Vorrichtung eignet sich insbesondere für die Zuführung eines Luft-Öl-Volumenstroms aus einem hoch temperierten Bereich der Strömungsmaschine, insbesondere einer Lagerkammer der Strömungsmaschine, da aufgrund der dort im Betrieb vorliegenden hohen Temperaturen ein aus den Lagerkammern abgeführter Luft-Öl-Volumenstrom eine hohe Beladung mit dampfförmigem Öl aufweist, der im Unterschied zu herkömmlichen Vorrichtungen mit der erfindungsgemäßen Vorrichtung einfach aus dem Luft-Öl-Volumenstrom abscheidbar ist.

Weitere Vorteile und vorteilhafte Ausführungsformen der erfindungsgemäßen Vorrichtung ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1a: eine stark schematisierte Längsschnittansicht eines Flugtriebwerkes mit einer Vorrichtung zum Abscheiden von Öl, wobei eine Nebenaggregategetriebeeinrichtung im Bläsergehäuse angeordnet ist;
- Fig. 1b: eine Fig. 1a entsprechende Darstellung eines Flugtriebwerkes mit der Vorrichtung zum Abscheiden von Öl, wobei eine Nebenaggregategetriebeeinrichtung im Bereich des Triebwerkskerns montiert ist;
- Fig. 2: einen vereinfacht gezeigten Ölkreislauf des Flugtriebwerks mit der Vorrichtung zum Abscheiden von Öl;
- Fig. 3: eine stark vereinfachte Prinzipskizze eines Ausschnitts des Ölkreislaufs gemäß Fig. 2 mit einer alternativ ausgeführten Vorrichtung zum Abscheiden von Öl;
- Fig. 4: eine Fig. 3 entsprechende Prinzipskizze mit einer alternativ ausgeführten Vorrichtung zum Abscheiden von Öl;
- Fig. 5: eine Fig. 3 entsprechende Prinzipskizze mit einer alternativ ausgeführten Vorrichtung zum Abscheiden von Öl;
- Fig. 6: eine vereinfachte Darstellung einer weiteren alternativ ausgeführten Vorrichtung zum Abscheiden von Öl mit einer Luftkühleinrichtung in Alleinstellung; und
- Fig. 7: eine vereinfachte Schnittansicht der Vorrichtung gemäß Fig. 6 entlang der Linie VII-VII.

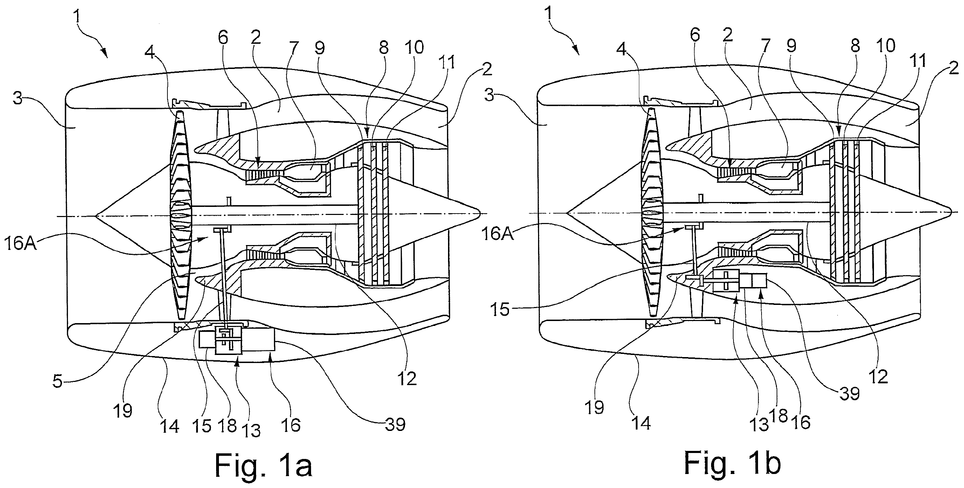

Eine als Flugtriebwerk bzw. Strahltriebwerk 1 ausgeführte Strömungsmaschine ist in Fig. 1 a und Fig. 1b jeweils in einer Längsschnittansicht gezeigt. Das Flugtriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Flugtriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist. Die Turbineneinrichtung 8 weist vorliegend drei Rotorvorrichtungen 9, 10 und 11 auf, welche in im Wesentlichen vergleichbarer Bauweise ausgebildet sind und mit einer Triebwerkswelle 12 verbunden sind.

Bei der Ausführung des Flugtriebwerks 1 gemäß Fig. 1 a ist eine Nebenaggregategetriebeeinrichtung 13 in einem äußeren Triebwerksgehäuse 14 angeordnet, das den Nebenstromkanal 2 begrenzt und den äußeren Umfangsbereich des Strahltriebwerkes 1 darstellt. Die Nebenaggregategetriebeeinrichtung 13 ist vorliegend über eine in radialer Richtung des Strahltriebwerks 1 verlaufende Antriebswelle 15 über ein inneres Getriebe 16A mit der Triebwerkswelle 12 verbunden und wird somit von der Triebwerkswelle 12 im Betrieb des Strahltriebwerkes 1 angetrieben bzw. mit Drehmoment versorgt. Von der Nebenaggregategetriebeeinrichtung 13 werden verschiedene Nebenaggregate 16 und eine Abscheideeinrichtung 39 in gewünschtem Umfang mit Drehmoment beaufschlagt. Zusätzlich ist im Bereich der Nebenaggregategetriebeeinrichtung 13 auch eine Tankvorrichtung 18 eines Ölkreislaufs 20 des Flugtriebwerks 1 vorgesehen, die ein Hydraulikfluidreservoir darstellt, aus dem Öl zur Kühlung und Schmierung verschiedener mit Öl zu beaufschlagender Bereiche des Flugtriebwerks 1, wie Lagereinrichtungen, Zahnradpaarungen des inneren Getriebes 16A und der Nebenaggregategetriebeeinrichtung 13 sowie weiterer zu kühlender und zu schmierender Baugruppen des Flugtriebwerkes 1, entnommen wird.

Im Unterschied hierzu ist die Nebenaggregategetriebeeinrichtung 13 mit den Nebenaggregaten 16, der Abscheideeinrichtung 39 und der Tankvorrichtung 18 bei der Ausführung des Flugtriebwerks 1 gemäß Fig. 1b in radialer Richtung zwischen dem Nebenstromkanal 2 und dem Triebwerkskern 5 in einem sowohl den Nebenstromkanal 2 als auch den Triebwerkskern 5 begrenzenden Bauteil 19 angeordnet.

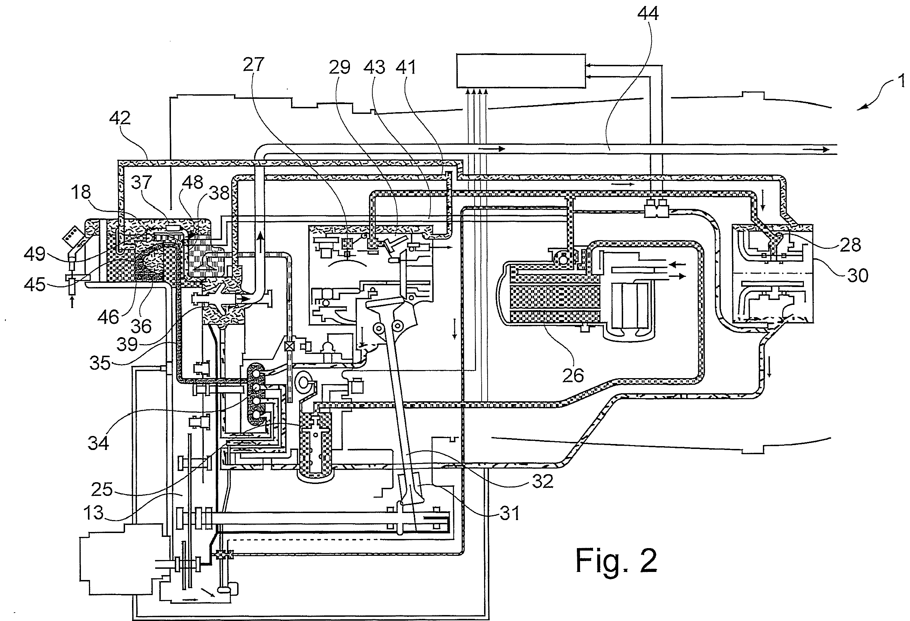

In Fig. 2 ist der Ölkreislauf 20 des Flugtriebwerks 1 näher ersichtlich, wobei Öl ausgehend von der Tankvorrichtung 18 mittels einer Pumpeneinrichtung 25 einer Kühlereinrichtung 26 zuführbar ist, in deren Bereich Öl des Ölkreislaufs 20 durch Treibstoff eines Treibstoffsystems in gewünschtem Umfang temperiert wird. Stromab der Kühleinrichtung 26 wird Öl Verbrauchern, insbesondere Lagereinrichtungen 27, 28 einer vorderen Lagerkammer 29 und einer hinteren Lagerkammer 30 und Lagereinrichtungen 31 zur Lagerung einer Antriebswelle 32 der Nebenaggregategetriebeeinrichtung 13 zugeführt, wobei die Lagereinrichtungen 27 und 28 zur Lagerung von Triebwerkswellen im Bereich der Lagerkammern 29 bzw. 30 des Flugtriebwerks 1 ausgeführt sind.

Aus Ölsümpfen der Lagerkammern 29 und 30 und der Nebenaggregategetriebeeinrichtung 13 wird Öl mittels mehrerer Rückförderpumpen 34 über eine Leitung 35 zurück zur Tankvorrichtung 18 geführt und in eine erste, als Entlüfter bzw. als sogenannter Deaerator 36 in der Form eines Zyklons ausgeführte Abscheideeinrichtung einer Vorrichtung 40 zum Abscheiden von Öl eingeleitet. Im Bereich des Zyklons 36 wird flüssiges tröpfchenförmiges Öl aus dem über die Leitung 35 der ersten Abscheideeinrichtung 36 zugeführten Öl-Luft-Gemisch abgeschieden und einem Ölreservoir der Tankvorrichtung 18 zugeführt. Ein sich bei der Abscheidung bildender Luft-Öl-Volumenstrom wird über eine mit einem Druckbegrenzungsventil 37 versehene Leitung 38 aus der ersten Abscheideeinrichtung 36 abgeführt und der zweiten Abscheideeinrichtung 39 zugeführt, die hier als Zentrifugalabscheider bzw. als sogenannter Breather 39 ausgeführt ist.

Im Bereich des Breathers 39 findet eine weitere Abscheidung von flüssigem tröpfchenförmigem Öl aus dem dem Breather 39 zugeführten Luft-Öl-Volumenstrom statt, wobei das abgeschiedene Öl über die Rückförderpumpen 34 wiederum dem Ölreservoir der Tankvorrichtung 18 zugeführt wird, wohingegen der Luft-Öl-Volumenstrom mit einer reduzierten Ölbeladung bzw. die gereinigte Luft über eine Leitung 44 an die Umgebung abgegeben wird.

Im Betrieb des Flugtriebwerks 1 entsteht im Bereich der Lagerkammern 29, 30 sowie in der Nebenaggregategetriebeeinrichtung 13 jeweils ein Luft-Öl-Gemisch, wobei das Luft-Öl-Gemisch aus der vorderen Lagerkammer 29 hier über eine Leitung 41 direkt dem Breather 39 zugeführt wird, in dessen Bereich aus diesem Luft-Öl-Volumenstrom in oben beschriebener Weise ebenfalls Öl abgeschieden wird, bevor er über die Leitung 44 an die Umgebung abgegeben wird.

Das in der hinteren Lagerkammer 30 entstehende Luft-Öl-Gemisch wird hier über eine Leitung 42 als Luft-Öl-Volumenstrom dem in der Tankvorrichtung 18 angeordneten Zyklon 36 zugeführt, wobei der Luft-Öl-Volumenstrom aufgrund der hohen im Betrieb des Flugtriebwerks 1 im Bereich der hinteren Lagerkammer 30 vorliegenden Temperaturen neben flüssigen Öltröpfchen auch einen hohen Anteil dampfförmigen Öls bzw. Öldampfs mitführt.

Sowohl der über die Leitung 42 dem Zyklon 36 zugeführte Luft-Öl-Volumenstrom als auch der über die Leitung 35 dem Zyklon 36 zugeführte Öl-Luft-Gemisch werden im Wesentlichen tangential in einen von einer Wandung 45 begrenzten Innenraum 46 des Zyklons 36 eingeleitet. Das Öl-Luft-Gemisch und der Luft-Öl-Volumenstrom strömen aufgrund der Schwerkraft spiralförmig entlang der Wandung 45 nach unten, wobei sich aufgrund der dabei wirkenden Zentrifugalkraft Öltröpfchen aus dem Öl-Luft-Gemisch und dem Luft-Öl-Volumenstrom an der Wandung 45 abscheiden und dort einen Ölfilm bilden. Der Ölfilm fließt schwerkraftgetrieben entlang der Wandung 45 nach unten in das Ölreservoir der Tankvorrichtung 18 ab.

Durch die im Bereich des Zyklons 36 vorliegenden dynamischen Verhältnisse steigt in einem mittleren Bereich des Zyklons 36 ein Luft-Öl-Volumenstrom auf, der eine geringere Ölbeladung als der über die Leitung 42 in den Zyklon 36 eingeleitete Luft-Öl-Volumenstrom aufweist. Dies ist dadurch begründet, dass beim Durchströmen des Zyklons 36 insbesondere große Öltröpfchen aus dem dem Zyklon 36 zugeführten Luft-Öl-Volumenstrom abgeschieden werden. Der in dem Zyklon 36 aufsteigende und nach wie vor mit dampfförmigem Öl beladene Luft-Öl-Volumenstrom wird in oben beschriebener Weise über die Leitung 38 dem Breather 39 zugeführt.

Zusätzlich ist eine lediglich schematisch gezeigte Einrichtung 48 zur Kühlung des in der Leitung 38 geführten Luft-Öl-Volumenstroms vorgesehen. Über eine sich von der Kühleinrichtung 26 zu der Leitung 38 erstreckende Leitung 43 wird eine Einrichtung 49 zum Einsprühen von Öl in die Leitung 43 mit kühlem Öl versorgt. Dabei wird über die Einrichtung 49 kühles Öl beispielsweise feinvernebelt in Form eines Sprühkegels in und/oder entgegen einer Strömungsrichtung des Luft-Öl-Volumenstroms in der Leitung 38 in diese eingebracht, wobei durch die im Vergleich zu der Temperatur des in der Leitung 38 geführten Luft-Öl-Volumenstroms geringere Temperatur des eingesprühten Öls das in der Leitung 38 geführte dampfförmige Öl tröpfchenförmig auskondensiert. Dieser Vorgang ist besonders effektiv, da der in der Leitung 38 geführte Luft-Öl-Volumenstrom aufgrund der vorherigen Abscheidung von Öltröpfchen im Bereich des Zykons 36, die eine Kondensation des dampfförmigen Öls negativ beeinflussen, lediglich einen sehr geringen Anteil an Öltröpfchen aufweist oder gar keine Öltröpfchen mitführt.

Das stromab der Einrichtung 49 kondensierte, tröpfchenförmige Öl des Luft-Öl-Volumenstroms kann auf einfache Weise im Bereich des Breathers 39 aus dem Luft-Öl-Volumenstrom abgeschieden werden, so dass der ausgehend von dem Breather 39 an die Umgebung abgegebene Luft-Öl-Volumenstrom eine sehr geringe Ölbeladung aufweist.

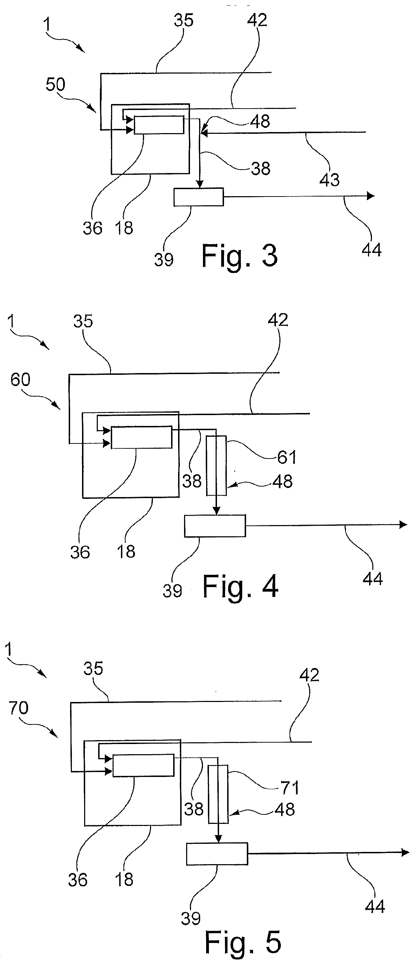

In den Fig. 3 bis Fig. 7 sind alternativ ausgeführte Vorrichtungen 50, 60, 70 und 80 zum Abscheiden von Öl aus einem in der Leitung 38 geführten Luft-Öl-Volumenstrom stark schematisiert dargestellt, wobei hinsichtlich der Funktionalität der Vorrichtungen 50, 60, 70, 80 grundsätzlich auf die Ausführungen zu der Vorrichtung 40 verwiesen wird. Die Vorrichtungen 40, 50, 60, 70 und 80 unterscheiden sich lediglich hinsichtlich der Kühlung des in der Leitung 38 geführten Luft-Öl-Volumenstroms und sind prinzipiell beliebig miteinander kombinierbar.

In Fig. 3 bis Fig. 6 ist jeweils die in der Tankvorrichtung 18 angeordnete erste Abscheideeinrichtung 36 und die zweite Abscheideeinrichtung 39 gezeigt, wobei der ersten Abscheideeinrichtung 36 mittels der Rückförderpumpen 34 über die Leitung 35 Öl aus den mit Öl beaufschlagten Bereichen 13, 29, 30 des Triebwerks 1 und mittels der Leitung 42 ein Luft-Öl-Volumenstrom aus der hinteren Lagerkammer 30 zugeführt wird. Über die Leitung 38 wird ein aus der ersten Abscheideeinrichtung 36 abgeführter Luft-Öl-Volumenstrom in die zweite Abscheideeinrichtung 39 eingeleitet und ein gereinigter Luft-Öl-Volumenstrom über die Leitung 44 an die Umgebung abgegeben.

In der Ausführung der Vorrichtung 50 gemäß Fig. 3 wird die Leitung 38 zur Kühlung des in der Leitung 38 geführten Luft-Öl-Volumenstroms zumindest bereichsweise von über die Leitung 43 in Richtung der Leitung 38 geführtem Öl umspült, wobei hierdurch eine Kondensation des dampfförmigen Öls in der Leitung 38 bewirkt wird, um die dabei entstehenden Öltröpfchen anschließend auf einfache Art und Weise in vorbeschriebenem Umfang abscheiden zu können.

Vergleichbar zu der Vorrichtung 50 wird eine Kühlung der Leitung 38 bei der in Fig. 4 gezeigten Vorrichtung 60 durch eine Umspülung zumindest eines Bereichs der Leitung 38 erzielt, wobei im Unterschied zu der Vorrichtung 50 bei der Vorrichtung 60 Treibstoff als Kühlmittel eingesetzt wird. Der Treibstoff wird beispielsweise durch eine die Leitung 38 zumindest bereichsweise umfassende Leitung 61 geführt, wobei eine Kühlleistung durch eine Oberflächenvergrößerung der Leitung 38 beispielsweise durch das Vorsehen von Rippen erhöht werden kann.

Bei der in Fig. 5 gezeigten Vorrichtung 70 wird die Leitung 38 beispielsweise durch eine Umspülung mit in einer Leitung 71 geführter Luft gekühlt. Alternativ hierzu kann die Leitung 38 zumindest abschnittsweise durch den Nebenstromkanal 2 des Flugtriebwerks 1 oder durch einen anderen Bereich des Flugtriebwerks 1 geführt werden, der von ausreichend kühler Luft durchströmt wird. Zusätzlich kann wiederum eine Kühlleistung durch eine Oberflächenvergrößerung der Leitung 38 beispielsweise durch das Vorsehen von Rippen erhöht werden.

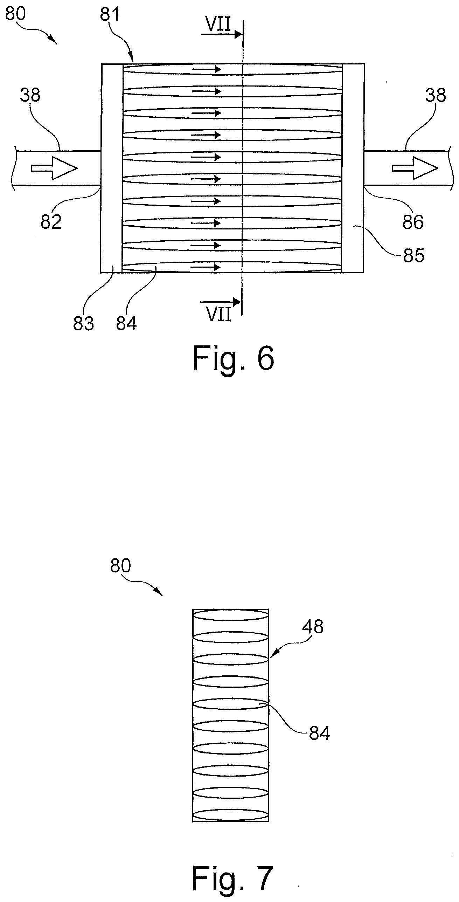

Fig. 6 und Fig. 7 zeigen eine Vorrichtung 80 mit einer als Luftkühleinrichtung 81 ausgeführten Einrichtung. Die Luftkühleinrichtung 81 ist hier in die Leitung 38 integriert und weist einen Einlassbereich 82 auf, über den der Luftkühleinrichtung 81 der Luft-Öl-Volumenstrom aus der Leitung 38 zuführbar ist. Stromab des Einlassbereichs 82 schließt sich ein Verteilerbereich 83 an, in dem der in der Leitung 38 geführte Luft-Öl-Volumenstrom auf mehrere als Kühlrippen ausgeführte Leitungen 84 aufgeteilt wird. In einem Sammelbereich 85 werden die Leitungen 84 wieder zusammengeführt, wobei der Luft-Öl-Volumenstrom über einen Auslassbereich 86 der Luftkühleinrichtung 81 wieder der Leitung 38 zugeführt wird.

Insbesondere quer zur Strömungsrichtung des Luft-Öl-Volumenstroms in den Leitungen 83 werden die Leitungen mit Kühlluft beaufschlagt, wodurch das dampfförmige Öl des Luft-Öl-Volumenstroms zu Öltröpfchen kondensiert. Zur Kühlung der Leitungen 84 der Luftkühleinrichtung 81 kann die Luftkühleinrichtung 81 zumindest bereichsweise innerhalb des Nebenstromkanals 2 angeordnet sein.

### Bezugszeichenliste

- 1: Strömungsmaschine; Flugtriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9, 10, 11: Rotorvorrichtung
- 12: Triebwerkswelle
- 13: Nebenaggregategetriebeeinrichtung
- 14: Triebwerksgehäuse
- 15: Antriebswelle
- 16: Nebenaggregate
- 16A: inneres Getriebe
- 18: Tankvorrichtung
- 20: Ölkreislauf
- 25: Pumpeneinrichtung
- 26: Kühlereinrichtung
- 27: Lagereinrichtung
- 28: Lagereinrichtung
- 29: vordere Lagerkammer
- 30: hintere Lagerkammer
- 31: Lagereinrichtung
- 32: Antriebswelle
- 34: Rückförderpumpe
- 35: Leitung
- 36: erste Abscheideeinrichtung; Zyklon
- 37: Druckbegrenzungsventil
- 38: Leitung
- 39: zweite Abscheideeinrichtung; Breather
- 40: Vorrichtung
- 41 bis 44: Leitung
- 45: Wandung
- 46: Innenraum
- 48: Einrichtung zur Kühlung
- 49: Einrichtung zum Einsprühen von Öl
- 50: Vorrichtung
- 60: Vorrichtung
- 61: Leitung
- 70: Vorrichtung
- 71: Leitung
- 80: Vorrichtung
- 81: Luftkühleinrichtung
- 82: Einlassbereich
- 83: Verteilerbereich
- 84: Leitung
- 85: Sammelbereich
- 86: Auslassbereich

## Patentansprüche

1. Vorrichtung (40, 50, 60, 70, 80) einer Strömungsmaschine (1) zum Abscheiden von Öl aus einem Luft-Öl-Volumenstrom mit einer ersten Abscheideeinrichtung (36) und einer zweiten Abscheideeinrichtung (39), wobei der ersten Abscheideeinrichtung (36) ein Luft-Öl-Volumenstrom aus einem mit Öl beladenen Bereich (13, 29, 30) des Flugtriebwerks (1) zuführbar ist, und wobei der Luft-Öl-Volumenstrom, dessen Ölbeladung im Bereich der ersten Abscheideeinrichtung (36) reduzierbar ist, stromab der ersten Abscheideeinrichtung (36) mittels einer Leitung (38) der zweiten Abscheideeinrichtung (39) zuführbar ist, **dadurch gekennzeichnet, dass** eine stromab der ersten Abscheideeinrichtung (36) und stromauf der zweiten Abscheideeinrichtung (39) angeordnete Einrichtung (48; 81) zur Kühlung des in der Leitung (38) geführten Luft-Öl-Volumenstroms vorgesehen ist.

2. Vorrichtung nach Anspruch 1, **dadurch gekennzeichnet, dass** die Einrichtung (48) als Luftkühleinrichtung ausgeführt ist.

3. Vorrichtung nach einem der Ansprüche 1 oder 2, **dadurch gekennzeichnet, dass** ein Nebenstromkanal (2) der Strömungsmaschine (1) die Einrichtung zur Kühlung darstellt, wobei die Leitung (38) zumindest bereichsweise innerhalb des Nebenstromkanals (2) geführt ist.

4. Vorrichtung nach einem der Ansprüche 1 bis 3, **dadurch gekennzeichnet, dass** die Einrichtung (48) zur Kühlung des in der Leitung (38) geführten Luft-Öl-Volumenstroms als Ölkühleinrichtung ausgeführt ist.

5. Vorrichtung nach einem der Ansprüche 1 bis 4, **dadurch gekennzeichnet, dass** die Einrichtung (48) zur Kühlung des in der Leitung (38) geführten Luft-Öl-Volumenstroms als Treibstoffkühleinrichtung ausgeführt ist.

6. Vorrichtung nach einem der Ansprüche 1 bis 5, **dadurch gekennzeichnet, dass** die Einrichtung (48) zur Kühlung des in der Leitung (38) geführten Luft-Öl-Volumenstroms eine Einrichtung (49) zum Einleiten von Öl in die Leitung (38) aufweist.

7. Vorrichtung nach einem der Ansprüche 1 bis 6, **dadurch gekennzeichnet, dass** die erste Abscheideeinrichtung (36) innerhalb einer Tankvorrichtung (18) eines Ölkreislaufes (20) der Strömungsmaschine (1) angeordnet ist.

8. Vorrichtung nach einem der Ansprüche 1 bis 7, **dadurch gekennzeichnet, dass** die erste Abscheideeinrichtung (36) als Zyklon ausgeführt ist.

9. Vorrichtung nach einem der Ansprüche 1 bis 8, **dadurch gekennzeichnet, dass** die zweite Abscheideeinrichtung (39) als Zentrifugalabscheider ausgeführt ist.

10. Vorrichtung nach einem der Ansprüche 1 bis 9, **dadurch gekennzeichnet, dass** wenigstens eine Leitung (42) vorgesehen ist, mittels welcher der ersten Abscheideeinrichtung (36) ein Luft-Öl-Volumenstrom aus einer Lagerkammer (29 und/oder 30) der Strömungsmaschine (1) zuführbar ist.
